Europäisches Patentamt

European Patent Office

Office européen des brevets

(11) Publication number: **0 420 416 A2**

# EUROPEAN PATENT APPLICATION

(21) Application number: 90309444.9

(22) Date of filing: 29.08.90

(51) Int. Cl.5: **G01B 7/03**, G01B 21/04

(30) Priority: 09.09.89 GB 8920447

(43) Date of publication of application:
03.04.91 Bulletin 91/14

(84) Designated Contracting States:
CH DE FR GB IT LI SE

(71) Applicant: **Renishaw plc**
**New Mills**
**Wotton-Under-Edge Gloucestershire GL12**
**8JR(GB)**

(72) Inventor: **Lloyd, Peter George**
**133 Roundways, Coalpit Heath**
**Bristol, Avon(GB)**
Inventor: **Wilson, David**
**The Fennels, Regent Street**
**Stonehouse, Gloucestershire GL10 2AA(GB)**

(74) Representative: **Waite, John et al**
**Renishaw plc Patent Department New Mills**
**Wotton-under-Edge Gloucestershire GL12**
**8JR(GB)**

(54) Method and apparatus of datuming a coordinate positioning machine.

(57) A datuming device (50) is provided for use on a coordinate measuring machine to calibrate a touch trigger probe (14). The device (50) comprises an artefact (52) supported on the bed 12 of the machine, the dimensions of the artefact (52) being precisely known. A piezo electric array (56) is provided to determine the instant of contact of the stylus (16) of the touch trigger probe (14) with the artefact (52). A processing circuit (70) detects a signal produced by the piezo array (56) and produces a step output (V1); a further circuit combines the output (V1) with the ouput (V2) from a circuit (32) (for processing the output of the probe (14)), and generates a further output (VP) corresponding to the delay between generation of the outputs (V1) and (V2). The further output (Vp) yields a value for the pretravel of the probe, and provides easy error mapping of the probe.

Fig. 3

# METHOD & APPARATUS OF DATUMING A COORDINATE POSITIONING MACHINE

The present invention relates to a method and apparatus of datuming a coordinate positioning machine (eg. a coordinate measuring machine or machine tool).

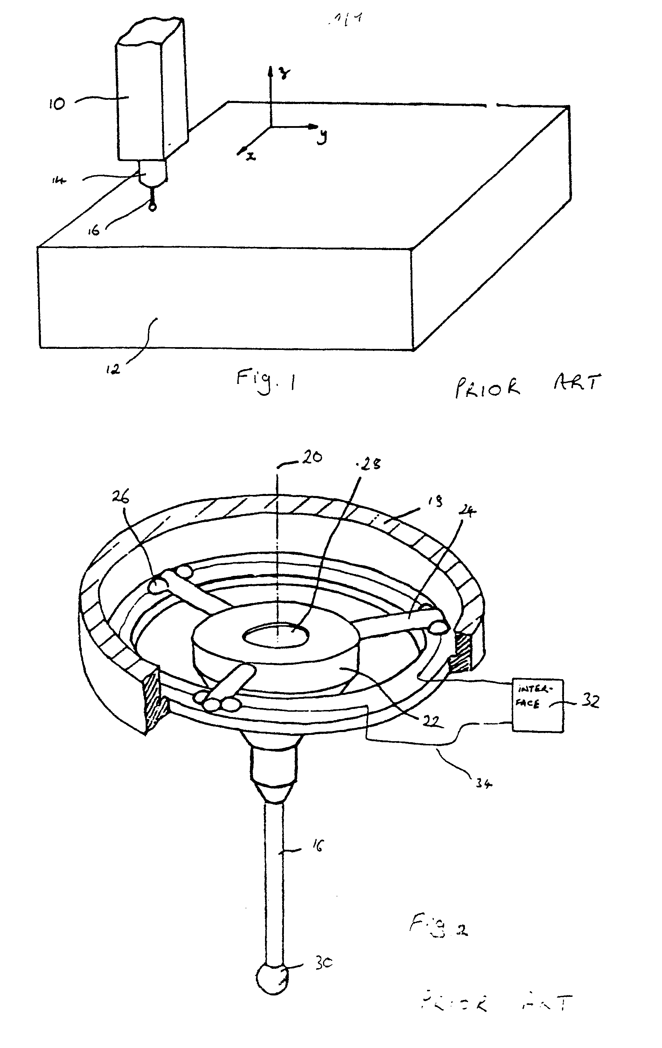

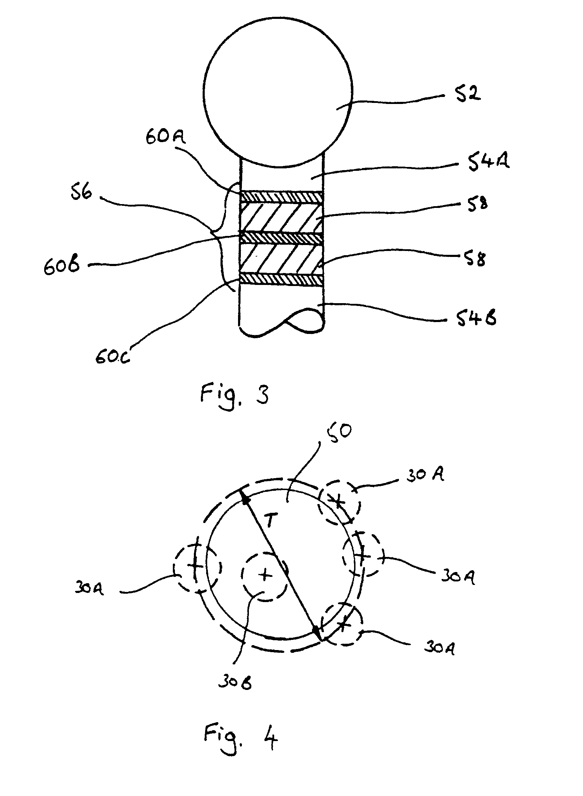

Such a machine is illustrated in Fig. 1 and typically comprises a head 10 supported for 3-dimensional movement in a Cartesian reference frame X,Y,Z, relative to a table 12 of the machine. Support structure for the head 10 together with motors for driving the head, and scales for measuring movement of the head in X,Y, and Z directions have been omitted for clarity. The head 10 supports a touch probe 14, which determines the instant of contact between a stylus 16 and a workpiece surface. The probe 14 (shown in more detail in Fig 2), comprises a cylindrical housing 18 and a carrier 20 for the stylus 16 which is kinematically supported by the housing 18 via three cylindrical rollers 22, each of which rest upon the convergent surfaces defined by an adjacent pair of balls 24 embedded in the base of the housing 18. A spring (not shown) is provided in order to urge the stylus carrier 20 into its kinematic location. The stylus 16 has a spherical sensing tip 30 for contacting a workpiece surface. The diameter of the sensing tip 30 must be known before measuring a workpiece with the probe. The signal produced upon contact between the sensing tip 30 and a workpiece surface is generated by an interface 32, which produces an output when the resistance of electrical circuit 34 (comprising the serial connection of each of the rollers 22 and associated pairs of balls 24) reaches a predetermined threshold. This is caused by one or more of the rollers 22 beginning to lift from its convergent surface seating with balls 24.

In practice a signal is not produced from interface 32 at the exact instant of contact between a workpiece and the sensing tip 30 due to deformation of the sensing tip 30, flexing of the stylus 16 (on a microscopic scale), and the electronic delay time between the instant of increase of resistance in the circuit 34 the output of a trigger signal. This delay corresponds to a movement of the head after workpiece-sensing tip contact known as pre-travel which must be compensated for. Furthermore it is a feature of probes such as the probe described in Fig 2 that a different force is required to displace the rollers 22 from their seats with the balls 24 in different directions in the X-Y plane. This results in a variation in the pre-travel in the X-Y plane.

Determination of the sensing tip diameter, the pre-travel, and the pre-travel variation may be determined by an operation known as datuming. Existing datuming apparatus comprises for example a sphere of precisely known dimensions provided on the bed of a coordinate positioning machine. Datuming is achieved by measuring the sphere with a touch probe and comparing the precisely known values of its dimensions with measurements made by the machine and probe. The present invention seeks to improve existing datuming techniques and apparatus.

Accordingly the present invention provides a datuming device for use on a coordinate positioning machine, comprising an artefact and a support for supporting the artefact on a bed of the machine, characterised by a sensor coupled to the device, for sensing strain and/or vibration excited in the device upon contact of an object with the artefact.

Embodiments of the invention will now be described, by way of example, and with reference to the accompanying drawings in which:

Fig 3 shows a detailed section of a datuming device according to the present invention;

Fig 4 shows a diagramatic representation of a datuming operation using the feature of Fig 3;

Fig 5 shows an interface for determining the pre-travel time delay; and

Fig 6 shows the signals generated in the interface of Fig 5.

Referring to Fig 3, a datuming device 50, comprising on artefact which in this example is a sphere 52 (having an accurately known diameter) is supported on the bed of a coordinate positioning machine by a support which in this example is a pillar 54. Other geometrical shapes of artefact e.g. a cube, are also possible. The device feature 50 is conveniently situated on the edge of the machine table and the centre of the sphere 52 is used to provide an origin for the axes X,Y and Z. This enables determination of the absolute position of the head 10 relative to the table; this is useful if it is desired to move the head to a particular area for a specific purpose (for example moving the head to cooperate with a device which automatically changes the probe 14). The pillar 54 comprises a first part 54A which couples the sphere 52 to a piezo-electric array 56, and a second part 54B which connects the piezo-electric array 56 to the table 12 of the machine. Alternatively, the artefact may be connected directly to the pillar 54 via the array 56. The piezo-electric array 56 comprises a pair of piezo-electric elements 58 sandwiched between three electrodes 60A, 60B and 60C. The array 56 is sensitive to the shockwaves and strain present in device 50 when an object comes into contact with the sphere 52, and produces a voltage signal upon experiencing such shockwave or strain. The polarities of the piezo-electric elements 58 are mutually opposing, so that upon compression of the elements 58 a positive voltage will be generated at central electrode 60B with respect to electrodes 60A and 60C (which lie adjacent the negative poles of the piezo-electric elements 58). This arrangement provides high sensitivity together with good noise immunity. In operation the array is connected to an interface which produces a trigger signal upon detecting the signal from the piezo array. The trigger signal is produced after a very short and constant (i.e. independent of the direction of the sensing tip 30 at the instant of impact with the sphere 52) time delay which may be calculated. Since the time delay is known the piezo array 56 and interface effectively produce a signal indicating the instant of touch between the sensing tip 30 and sphere 52. The signals produced by both the piezo electric array 56, and the probe 14 may be processed via a single interface (which incorporates the features of interface 32) which will be described later.

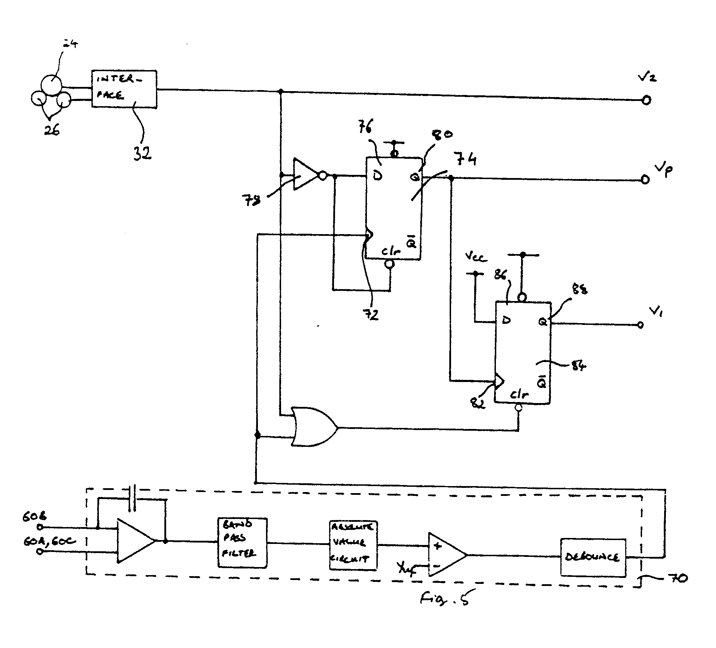

A datuming operation using the datuming device 50 will now be described with reference to Fig 4. Referring now to Fig 5, the sensing tip 30 is brought into contact with the datum sphere 52 at a plurality of points. The points illustrated by sensing tips 30A all lie substantially in the X-Y plane (i.e. around the 'side' of the ball 52 as seen in Fig 1). The point illustrated by sensing tip 30B lies above the said X-Y plane (i.e. on the 'top' of the ball 52 as seen in Fig 1). The number of points should be at least 4 (the minimum number of points required to determine the centre of a sphere) and preferably for higher accuracy should be greater. For each contact between the sphere and sensing tip 30 a signal $V_1$ is generated by the interface associated with the piezo array 56, indicating the instant of touch between the sensing tip 30 and the datum sphere 52; the outputs of the read heads at this instant are recorded. Additionally for each sensing tip 30 - sphere 52 contact the outputs of the read heads are also recorded when interface 32 generates a trigger signal $V_2$, (caused by probe 14 detecting contact between sensing tip 30, and datum sphere 52); this signal $V_2$ occurs after $V_1$ because of the pre-travel.

The data points generated by the piezo sensors on the datum sphere 52, are used to determine its centre (by fitting a sphere to the data points obtained) since the measurement of values obtained in this way contain no pre-travel. The centre of the sphere 52 may then be used to define the origin of the X,Y and Z coordinate system of the machine.

The position data generated by the probe 14 is then used to obtain a "best fit" to the surface of a sphere, whose centre position has already been determined from the data generated by the piezo-electric array 56. However, this opertion will yield a sphere of diameter T, the diameter T being greater than the diameter of the sphere 52 by an amount equal to the diameter of the sensing tip less twice the average pre-travel.

N.B. (a) average pre-travel because the measurements were taken in different directions and so were subject to pretravel variation and

(b) twice this value because two measurements are required to determine a diameter. The difference between the actual diameter of the sphere 52 and diameter T is known as the "effective diameter" E.

Thus, this operation has revealed the position of the centre of the sphere 52, and has yielded a single correction parameter (known as the effective diameter/radius of the sensing tip 30) which is the sum of the correction values for the actual radius of the sensing tip, and the average pretravel. This therefore renders subsequent distinct treatement of these two errors for the purpose of correcting measurements made with the machine unnecessary.

For the majority of measurement operations pretravel variation is not a significant source of error (once the datuming operation described above has calibrated out the average pretravel), and so further datuming is unnecessary. If however it is necessary to take account of pretravel variation then an error map of the pretravel in different probing directions, and at different probing speeds must be produced.

The process of error mapping is made much easier by the present invention. As explained above, for each point of contact between the serning tip 30 and the datum sphere 52 a pair of data points are generated: one is generated upon touch of the sensing tip 30 with the datum sphere 52 from the piezo-electric array 56 (and therefore is not subject to pretravel), and the other is generated from the probe 14 after the (variable) pre-travel time delay. The two data points associated with each point of contact, thus yield the pre-travel distance for each direction of measurement. An error map of pre-travel against direction of impact may therefore be generated simply by driving the sensing tip 30 into the datum sphere 52 in a number of different directions, and for each of these directions calculating the pre-travel corresponding to that direction and, if appropriate, probing speed. The present invention provides accurate error-mapping since the instants of touch (of sensing tip and sphere) and trigger (of the probe) may both be directly measured and compared for each measurement.

To generate directly a value for, or corresponding to, the pretravel there is provided a circuit for processing signals from a coordinate positioning machine having first and second sensing means provided on the machine, the circuit comprising: first detecting means for detecting a signal produced by the first sensing means and for generating or first detection signal; second detecting means for detecting a signal produced by the second sensing means, and for generating a second detection signal; and means for generating an output signal corresponding to the time interval between the first and second detection signals. Preferably the output signals will be a pulse whose width corresponds to the time interval between the generation of the two detection signals. Typically one of the sensing means will be provdied on the bed of the machine (and may for example be a piezo on a datuming device) and the other will be provided on the head (for example by a touch-trigger probe). Such a circuit also however finds application in conjunction with a probing arrangement which uses two sensors (e.g. job contact sensing and the probe shown in Fig 2) and in which it is desired to determine the time interval between sensing signals produced by the two sensors.

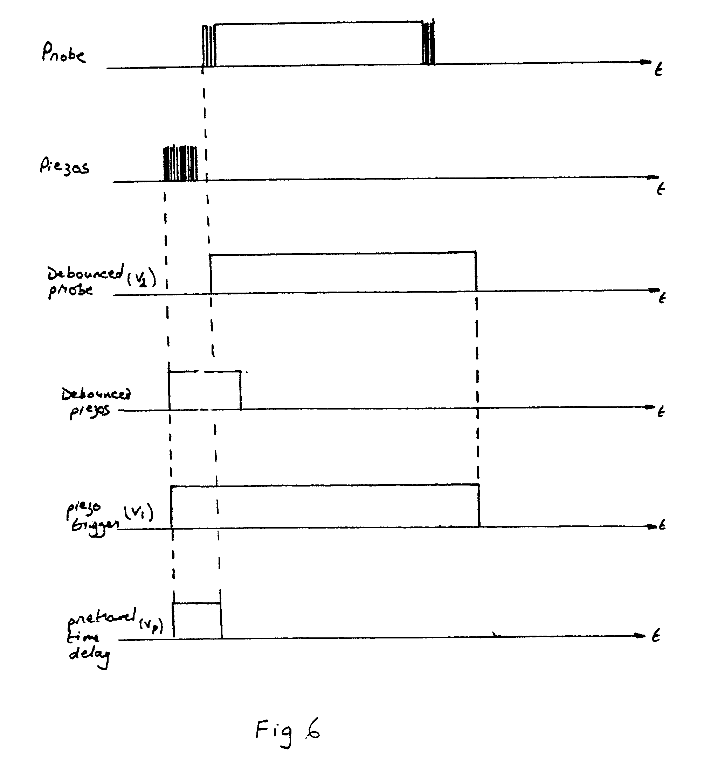

Referring now to Figs 7 and 8, an interface 32 for detecting the resistance change in the ball and roller circuit 34 outputs a signal $V_2$ which is shown in Fig 8. The interface produces a "debounced" signal which effectively cleans up the leading and trailing edges of the signal from the circuit 34 in the probe 14. A signal conditioning interface 70 provides a debounced output from the piezo electric array 56. The debounced piezo output is input into the clock 72 of a D-type flip-flop 74, D input 76 of which is connected to the probe interface 32 via an inverter 78. when the debounced piezo output goes high, and is input into clock 72 of flip-flop 74, the value of D input 76 is clocked onto the Q output 80 and produces a voltage $V_p$. At the instant the debounced piezo output goes high the output of interface 32 is low (since the probe 14 and interface 32 have not yet produced a signal due to the pre-travel time delay) and so both the D input 76 and the Q output 80 will be high. The Q output 80 is connected to the clock input 82 of a second D-type flip-flop 84. The D input 86 of flip-flop 84 is perpetually high so the high Q output 80 clocks a high value on Q output 88. The Q output 88 is the signal $V_1$ referred to earlier and is known as the piezo trigger signal.

When the debounced probe output of interface 32 goes high the output of inverter 78 will go low thus causing the flip-flop 74 to reset the Q output 80 (and thus the voltage $V_p$) to zero. The output $V_p$ is thus a pulse signal which goes high upon generation of a debounced piezo output, and goes low upon generation of a debounced probe output; the width of the pulse $V_p$ is thus the pre-travel time delay. when both the debounced piezo and debounced probe outputs go low, flip-flop 84 is reset and the piezo trigger signal then goes low. The resetting of the piezo trigger signal only after the sensing tip 30 has re-seated prevents the generation of subsequent piezo signals (for example due to rubbing of the sensing tip on the surface of datum sphere 52) from interfering with the generation of the essential signals $V_1$, $V_2$ and $V_p$.

The pretravel time delay signal may be used to drive a separate counter which counts the output of the read heads for the duration of the width of the signal, and thus determine the pretravel directly.

## Claims

1. A datuming device (50) for use on a coordinate positioning machine, comprising an artefact (52) and a support (54) for supporting the artefact (52) on a bed (12) of the machine, characterised by a sensor (56) coupled to the device (50), for sensing strain and/or vibration excited in the device (50) upon contact of an object (30) with the artefact (52).

2. A device according to claim 1 wherein the support (54) comprises two parts (54A,54B), the sensor (56) comprises at least one element (56A,56B) sensitive to tension and compression, and said at least one element (56A,56B) is clamped between the two parts (54A,54B) of the support (54).

3. A device according to claim 1 wherein the sensor (56) comprises at least one element (56A,56B) sensitive to tension and compression, and said at least one element (56A,56B) is clamped between the artefact (52) and support (54).

4. A device according to claim 2 or claim 3 wherein said at least one element (56A,56B) is a piezo electric element.

5. A device according to claim 2 or claim 3 wherein said at least one element is a strain gauge.

6. A device according to any one of the preceding claims wherein the artefact (52) has a precisely known geometry and dimensions.

7. A device according to any one of the preceding claims, in combination with a circuit for processing a sensing signal from said sensor (56), and a signal from a touch probe, the circuit comprising:
first detecting means (70) for detecting said sensing signal, and for generating a first detection signal (V1)
second detecting means (32) for detecting said probe signal, and for generating a second detection signal (V2); and
means for generating an output (Vp) corresponding to the time interval between the generation of the first (V1) and second (V2) detection signals.

Fig. 1    PRIOR ART

Fig. 2

PRIOR ART

Fig. 3

Fig. 4

Fig. 5

Fig 6